# EUROPEAN PATENT SPECIFICATION

(11) **EP 3 659 792 B1**
(45) Date of publication and mention of the grant of the patent: **01.09.2021**
(21) Application number: 19211663.0
(22) Date of filing: 26.11.2019
(51) Int. Cl.: B29D 30/54, B29D 30/56

(54) **TYRE COLD RETREADING METHOD AND SYSTEM**
REIFENKALTRUNDERNEUERUNGSVERFAHREN UND -SYSTEM
PROCÉDÉ ET SYSTÈME DE RECHAPAGE À FROID DE PNEUMATIQUES

(30) Priority: 29.11.2018 IT 201800010702
(43) Date of publication of application: 03.06.2020
(73) Proprietor: Bridgestone Europe NV/SA, 1932 Zaventem (BE)
(72) Inventor: LELIO, Luca, 00128 Roma (IT); BRAM, Vincent, 1932 Zaventem (BE)
(74) Representative: Marchetti, Alessio

(56) References cited:
- WO-A1-2014/163610
- GB-A- 506 142

## Description

### TECHNICAL FIELD

The present invention relates to a tyre cold retreading method and system.

The present invention may be used to advantage for retreading truck tyres, to which the following description refers purely by way of example.

### BACKGROUND ART

Traditionally, after first use "truck" pneumatic tyres are retreaded, i.e., they are provided with a new tread in place of the old worn tread which is removed beforehand. The retreading of a "truck" pneumatic tyre provides to eliminate the old worn tread mechanically from the used pneumatic tyre in order to expose the "casing" , and subsequently applying a new tread to the casing. The application of a new tread to the casing provides winding about the same casing a "tread strip"; the casing is then subjected to a curing process in order to determine the optimum adhesion of the tread to the casing. In the hot retreading process, the tread strip is green and without a pattern which is implemented during the curing step in a curing press provided with a mold having the required pattern.

In the hot retreading process, the curing takes place at high temperatures (around 150°C to 160°C) and high pressures (in the order of about 1.4-1.6 MPa) which are needed to make the rubber fluid enough to flow into the mold in order to form the pattern during curing; the thermal and mechanical stresses to which the casing is subjected due to such high temperatures and pressures can however cause damage to the same casing .

In the cold retreading process, the tread strip (called *"PCT Pre Cured Tread* - *strip"*) is pre-cured and already provided with the pattern, and between the casing and the pre-cured tread strip an intermediate strip or *"cushion",* having a bonding function, is interposed. In the cold retreading process, the curing is only meant to cure the intermediate strip in order to determine the optimal adhesion of the tread strip to the casing by means of the bonding action of the cushion (i.e., a pattern is not printed during curing); as a result, in the cold retreading process, curing takes place at lower temperatures (in the order of 100°C - 125°C), at lower pressures (in the order of 0.4-0.6 MPa), the casing is therefore subjected to lower thermal and mechanical stresses.

Generally, the hot retreading process provides for an average curing period for each *"truck"* tyre of about 1 hour at around 150°C - 160°C, while the cold retreading process provides for an average curing period for each "truck" tyre of about 4 hours at around 100°C - 125°C.

In the cold retreading process and to ensure adequate adhesion of the tread strip to the casing (with the interposition of the intermediate green rubber strip), it is necessary during curing to apply a radial pressure that compresses the tread strip against the casing. In known retreading plants, such a radial pressure is obtained by inserting the tyre in an autoclave within which an overpressure (in the order of 0.6 MPa), in relation to atmospheric pressure, is implemented and by inserting the tyre into a flexible "envelope" within which a vacuum is initially created and which is subsequently inflated with air to a pressure of about 0.45 Mpa); the difference in pressure (normally called *"DPC"*), which is maintained during the curing cycle, results in the generation of a pneumatic pressure that compresses the tread strip against the casing.

The use of the autoclave and the envelope, wherein the "DPC" pressure differential is applied, the vacuum makes it possible to apply a uniform pressure to the entire tread strip both at the peaks of the blocks of the pattern and at the valleys of the pattern; the uniformity of the pneumatic pressure (which would never be mechanically feasible insofar as the valleys of the pattern cannot be reached due to the size, shape and number thereof) makes it possible to ensure optimal tread adhesion to the casing.

However, the use of the autoclave and the envelope has several drawbacks: firstly, in use, the autoclave exhibits an internal pressure that is considerably greater than atmospheric pressure and that therefore poses various problems as regards the safety of the operators of the plant; furthermore, applying the envelope to the tyre is quite long and laborious, the envelope has a rather short working life (i.e., it must be replaced quite often), and the possible failure of the envelope during curing (a frequent situation) forces the recommencement of the retreading process or, in some cases, even the scrapping of the tyre.

Patent document WO2014/163610 A1 discloses the features of the preamble of claim 1.

### DESCRIPTION OF THE INVENTION

It is an object of the present invention to provide a tyre cold retreading method and system designed to eliminate the above drawbacks, and which are cheap and easy to implement.

According to the present invention, there are provided a cold tyre retreading method and system, as claimed in the accompanying Claims.

The claims describe preferred embodiments of the present invention forming an integral part of the present disclosure.

### BRIEF DESCRIPTION OF THE DRAWINGS

A non-limiting embodiment of the present invention will be described by way of example with reference to the accompanying drawings, in which:
Figure 1 is a schematic view of a tyre cold retreading plant implemented according to the present invention;

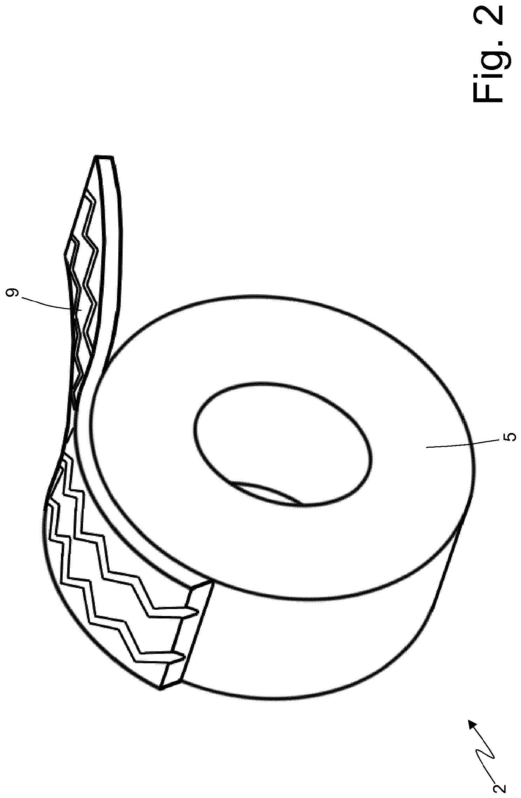

Figure 2 is a schematic view of a winding of a pre-cured tread strip around a casing of a tyre to be retread;
Figure 3 is a schematic view of an application of a filler over a pre-cured tread strip previously wound around a casing of a tyre to be retread;
Figure 4 is a schematic view of a curing of a retread tyre;
Figure 5 is a schematic view of a removal of a filler from the pre-cured tread strip after the curing;
Figure 6 is a schematic view of an application of a filler over a flat pre-cured tread strip; and
Figure 7 is a schematic view of a winding around a casing of a tyre to be rebuilt of a pre-cured tread strip previously provided with a filler.

### PREFERRED EMBODIMENTS OF THE INVENTION

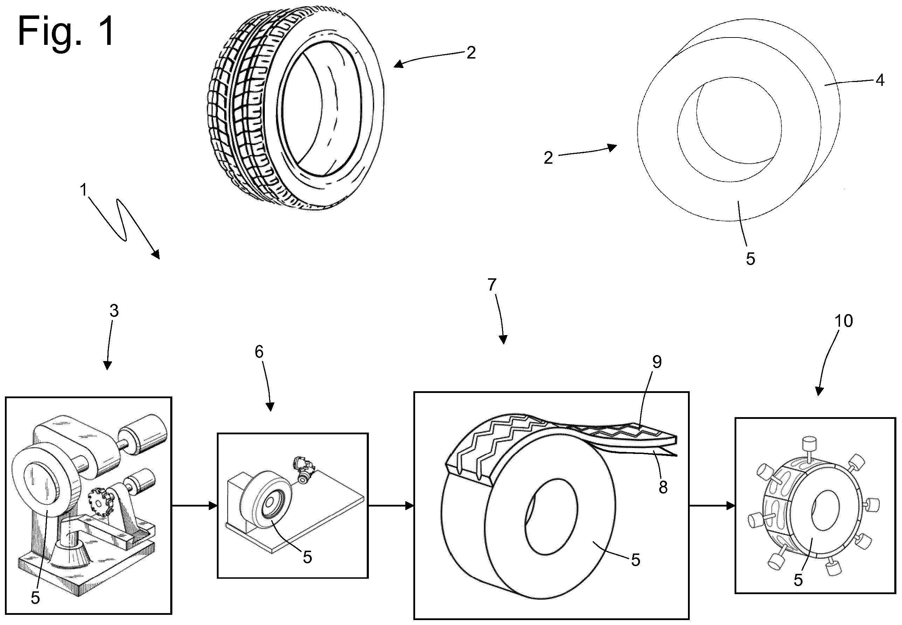

Number 1 in Figure 1 indicates as a whole a cold retreading plant for retreading a *"truck"* tyre 2.

The retreading plant 1 comprises a removal station 3, wherein the old worn tread (shown on the left) is mechanically removed from the 2, exposing an equatorial surface 4 (shown on the right) of a casing 5 of the tyre 2.

Furthermore the retreading plant 1 comprises a skiving station 6, wherein the equatorial surface 4 of the casing 5 is subjected to skiving in order to remove any local damage; the skiving operation can result in the formation on the equatorial surface 4 of the casing 5 of craters of random and variable dimensions and positions which are subsequently filled with green rubber.

The retreading plant 1 comprises a winding station 7 whereto the casing 5 is transferred at the end of the skiving; within the winding station 7, an intermediate strip or cushion 8 of green rubber and a pre-cured tread strip 9 are wound about the casing 5 (one after the other). It is important to observe that the pre-cured tread strip 9 has already been cured in a special mold before being wound about the casing 5 and presents the tread pattern.

The retreading plant 1 comprises a curing station 10, wherein the retreaded tyre 2 (i.e. the casing 5 provided with the cushion 8 and the pre-cured tread strip 9) is subjected to a curing process for curing the cushion 8 which is interposed between the casing 5 and the pre-cured tread strip 9 thus resulting in optimal adhesion of the pre-cured tread strip 9 to the casing 5 by means of the bonding action of the cushion 8.

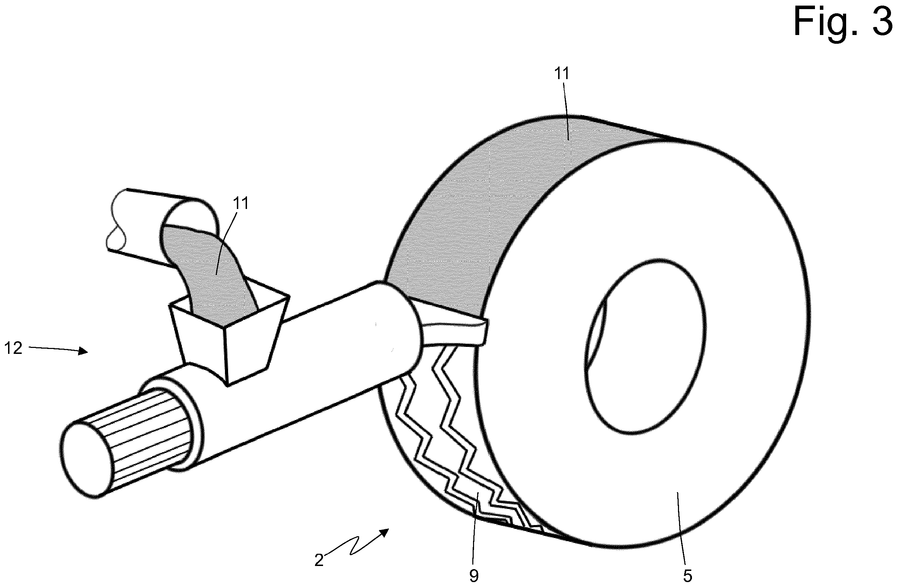

According to what shown in Figure 3, after winding the pre-cured tread strip 9 around the casing 5 and before subjecting the casing 5 to curing, onto the pre-cured tread strip 9 is applied a filler 11 in the fluid which completely fills the tread pattern (that is, it penetrates the grooves of the tread pattern) and forms a coating that covers the pre-cured tread strip 9. In other words, the filler 11 constitutes a *"negative"* of the pre-cured tread strip 9 covering the pre-cured tread strip 9 by penetrating into the grooves of the tread pattern.

The filler 11 is applied on the pre-cured tread strip 9 so as to completely cover the pre-cured tread strip 9 and then present externally a flat equatorial surface (i.e. smooth, free of depressions and grooves); in other words, the filler 11 is used to form a coating that *"smoothes"* the pre-cured tread strip 9 by providing outwardly a flat, equatorial surface (i.e. smooth, without depressions and grooves).

In the embodiment illustrated in Figure 3, the filler 11 is applied onto the pre-cured tread strip 9 by an applicator device 12 after the pre-cured tread strip 9 has been wrapped around the casing 5 (i.e. when the strip 9 of the pre-cured tread has an annular shape).

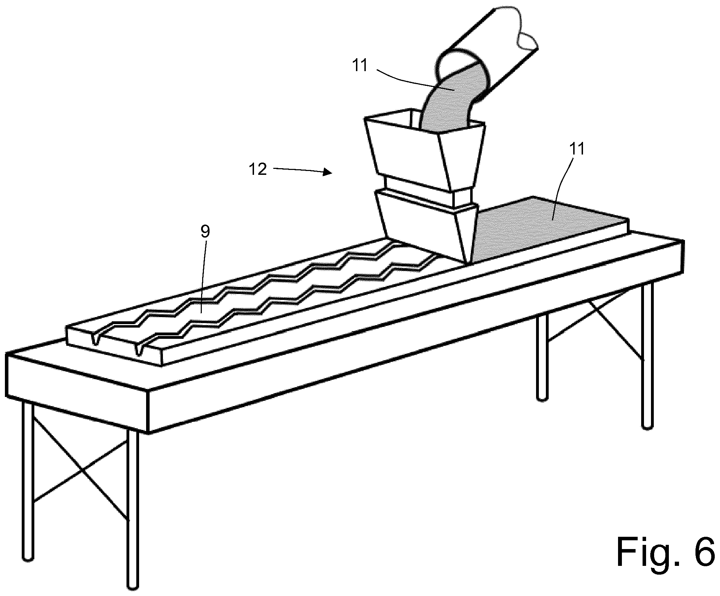

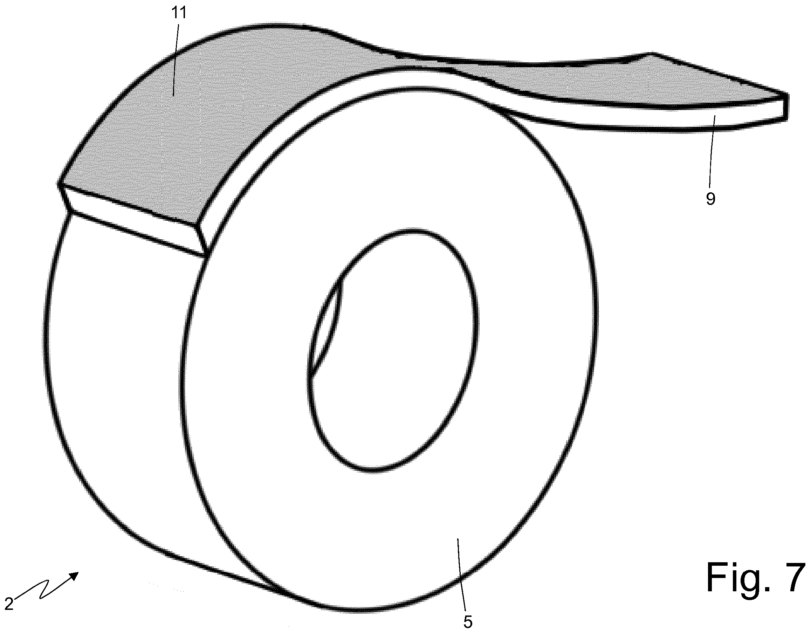

In the variant shown in Figure 6, the filler 11 is applied to the pre-cured tread strip 9 by an applicator device 12 before the pre-cured tread strip 9 is wrapped around the casing 5 (i.e. when the tread strip 9 pre-cured has a flat shape). In this embodiment and as illustrated in Figure 7, the pre-cured tread strip 9 provided with the filler 11 (i.e. coated by the filler 11) is wound around the casing 5.

By way of example, the applicator device 12 comprises an outlet mouth which has the same width as the pre-cured tread strip 9 and is provided with an outlet opening which dispenses the filler 11 in a fluid state uniformly throughout the transversal extension of the pre-cured tread strip 9.

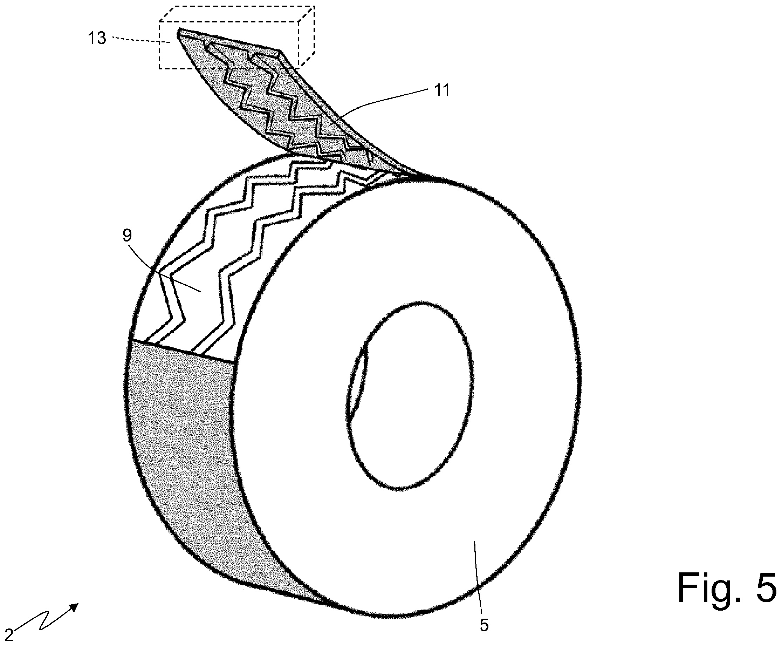

As illustrated in Figure 5, after curing the filler 11 is removed from the pre-cured tread strip 9 by a removal device 13 and this operation terminates the tyre retreading process 2.

As previously stated, the filler 11 is (at least initially, i.e. at the moment of application on the pre-cured tread strip 9) in a fluid state, i.e. it is sliding since it has limited consistency; in other words, the filler 11 is (at least initially) in a fluid state, i.e. it is deformed indefinitely if subjected to a cutting stress independently of the extent of the cutting stress.

According to a possible embodiment, the filler 11 contains metal powder (very thin) which has the advantage of having an excellent thermal transmissibility which is indispensable during curing (as better explained below).

According to a possible embodiment, the filler 11 could also contain elastomeric powder obtained at least partially grinding the old worn tread (in other words *"recycling"* the old tread worn to form the filler 11).

According to a preferred embodiment, the filler 11 can be made by clay or other similar natural material which has the advantage of being easy retrievable, inexpensive and recyclable either for further retreading operation or in general. Furthermore, the natural shrinkage of the clay due to curing allows also easy removal of the filler 11 from the tread pattern; in other words, after curing the filler 11 made by clay (or other similar natural material) can be removed easily from the pre-cured tread strip 9 thanks to the natural shrinkage of the clay due to curing. In general, the filler 11 can be made (partially or completely) by a material (such as clay) which shrinks during the curing (i.e. has a natural shrinkage due to curing).

According to a possible embodiment, the filler 11 comprises binders (for example polyvinyl glues) which dry after application of the filler 11; in this way, the filler 11 forms a compact strip which, after curing, can be unwound from the tyre 2 (as illustrated for example in Figure 5). In this embodiment, the filler 11 in a fluid state is a rather dense sludge which, when dried, forms a more or less compact body.

According to an alternative embodiment, the fluid filler 11 is free of binders which dry after application of the fluid filler 11 and therefore the filler 11 is rendered at least partially stable after application of the filler 11 by mechanical compacting; in this way, the filler 11 does not form a compact strip and after curing is generally removed being previously destroyed (for example by high frequency vibrations and/or by high pressure water jets). In this embodiment, the filler 11 in a fluid state is in essence a very thin powder which when pressed tends to compact.

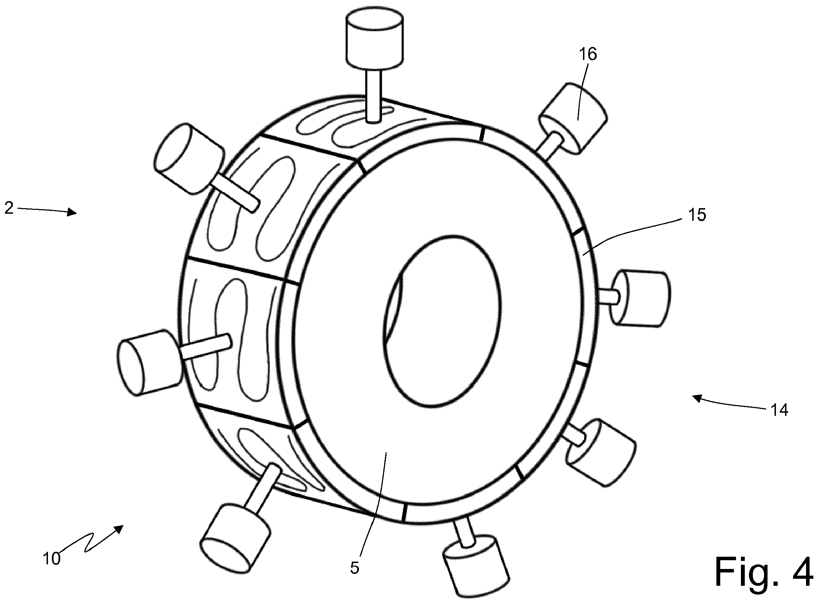

According to what shown in Figure 4, the curing station 10 comprises a curing mold 14 which is composed of a plurality of pressure bodies 15 which each are shaped as a circular sector and together constitute a ring adapted to contain the tyre 2. Each pressure body 15 is moved radially (and thus pushed radially against the tyre 2) by an actuator 16 (for example a pneumatic or hydraulic cylinder). According to a preferred embodiment, the actuators 16 are adapted to apply a radial pressure towards the center (i.e. a radial pressure which compresses the tyre 2) of calibrated force and determined in such a way that during the curing process the tyre 2 (i.e. the pre-cured tread strip 9 which is part of the tyre 2) is compressed radially at a desired pressure; by way of example, the actuators 16 could use to radially press the pressure bodies 15 a calibrated pressure pneumatic or hydraulic system, or they could use a fully mechanical system provided with calibrated springs.

Each pressure body 15 is heated to transmit heat to the pre-cured tread strip 9 and then to the substrate 8; the pressure bodies 15 are not in direct contact with the pre-cured tread strip 9 since the pre-cured tread strip 9 is coated by the filler 11 and, consequently, the heat held by the pressure bodies 15 to reach the pre-cured tread strip 9 must first pass through the filler 11 (as a result and as previously stated the filler 11 must be a good heat transmitter).

During curing, the tyre 2 is maintained at ambient pressure and a radial pressure is applied mechanically to the tread strip 9 by the pressor bodies 15 of the curing mold 14 and by the interposition of the filler 11. In other words, the pressures bodies 15 of the curing mold 14 press on the filler 11 which has a smooth surface externally (hence the pressure exerted by the pressure bodies 15 is distributed uniformly over the whole filler 11); the filler 11 transmits the pressure exerted by the pressure bodies 15 uniformly over the whole pre-cured tread strip 9 since the filler 11 is homogeneously distributed over the whole pre-cured tread strip 9 (i.e. also in all the grooves of the tread pattern). Accordingly, the filler 11 acts as a *"distributor"* of the pressure exerted by the pressure bodies 15 over the entire pre-cured tread strip 9 by being a coating that negatively reproduces the shape of the pre-cured tread strip 9.

In essence, the filler 11 which covers the pre-cured tread strip 9 constitutes a *"counter-mold"* (a mechanical interface) which cooperates with the curing mold 14 to distribute uniformly over the whole pre-cured tread strip 9 the pressure (thrust) applied by the pressor bodies 15 of the curing mold 14.

As previously stated, during the curing process the tyre 2 is kept at ambient pressure and a radial pressure is applied mechanically to the pre-cured tread strip 9 (which is part of the tyre 2 and constitutes the outermost part of the tyre 2 same). In particular, during curing, a radial pressure is applied mechanically to the pre-cured tread strip 9 by a series of pressure bodies 15, which are arranged around the tyre 2 and are pushed with a radial force determined against the pre-cured tread strip 9.

The embodiments described herein can be combined without departing from the scope of protection of the present invention.

The retreading method described above has numerous advantages.

In particular, the retreading method described above avoids the use, during the curing process, of an autoclave (avoiding the safety problems that the use of the autoclave entails) and of envelopes for the vacuum (avoiding the complicated dressing / removing the tyre 2 and the risks of breaking the vacuum envelopes); this result is obtained thanks to the fact that the pre-cured tread strip 9 is covered by the filler 11 which has a perfectly smooth outer surface and therefore it is possible to mechanically apply a uniform pressure on the pre-cured tread strip 9 during the curing process pushing on the filler 11 which covers the pre-cured tread strip 9.

### LIST OF REFERENCE NUMBERS OF FIGURES

- 1: retreading plant
- 2: tyre
- 3: removal station
- 4: equatorial surface
- 5: casing
- 6: skiving station
- 7: winding station
- 8: cushion
- 9: pre-cured tread strip
- 10: curing station
- 11: filler
- 12: applicator device
- 13: removal device
- 14: curing mold
- 15: pressure bodies

## Claims

1. A method of cold retreading a tyre (2); the cold retreading method comprises the steps of:
removing the old worn tread from the tyre (2) in order to expose an equatorial surface (4) of a casing (5) of the tyre (2);
winding about the equatorial surface (4) of the casing (5) a green rubber cushion (8) and a pre-cured tread strip (9) provided with a tread pattern; and
curing the green rubber cushion (8) inserted within the tyre (2) between the casing (5) and the pre-cured tread strip (9);
applying to the pre-cured tread strip (9) before curing, a filler (11) in a fluid state which enters the grooves of the tread pattern and forms a coating covering the pre-cured tread strip (9); and
removing the filler (11) covering the pre-cured tread strip (9) after curing;
the cold retreading method is **characterized in that** the filler (11) contains a material which shrinks during the curing.

2. The method according to claim 1, wherein the filler (11) contains clay or other similar natural material.

3. The method according to claim 1, wherein the filler (11) contains metal powder.

4. The method according to any one of claims 1 to 3, wherein the filler (11) contains elastomer powder.

5. The method according to claim 4, wherein the elastomer powder is at least partially obtained by crushing the old worn out tread.

6. The method according to any one of claims 1 to 5, wherein the filler (11) comprises binders which dry after application of the fluid filler (11).

7. The method according to claim 6, in which the binders are constituted by polyvinyl glues.

8. The method according to any one of claims 1 to 5, wherein the filler (11) is free of binders which dry after application of the fluid filler (11).

9. The method according to claim 8, wherein the filler (11) is rendered at least partly stable after application of the filler (11) in a fluid state by mechanical compaction.

10. The method according to any one of claims 1 to 9, wherein, during curing, the tyre (2) is maintained at ambient pressure and a radial pressure is mechanically applied to the tread strip (9) by pressing from external on the filler (11) covering the pre-cured tread strip (9).

11. The method according to claim 10, wherein, during curing, a radial pressure is applied mechanically to the pre-cured tread strip (9) by a series of pressure bodies (15), which are arranged around the tyre (2) to form a ring and are pushed with a determined radial force against the filler (11) which covers the pre-cured tread strip (9).

12. The method according to claim 11, wherein the pressure bodies (15) are heated to transmit heat to the pre-cured tread strip (9) and then to the substrate (8).

13. The method according to any one of claims 1 to 12, wherein the filler (11) in a fluid state is applied to the pre-cured tread strip (9) before winding the pre-cured tread strip (9) around the casing (5).

14. The method according to any one of Claims 1 to 12, in which the filler (11) in a fluid state is applied to the pre-cured tread strip (9) after winding the pre-cured tread strip (9) around the casing (5).

15. A cold retreading plant (1) for carrying out the method of any of the previous claims, comprising:
a removing station (3) for removing the old worn tread strip from the tyre (2) in order to expose an equatorial surface (4) of a casing (5) of the tyre (2);
a winding station (7) for winding about the equatorial surface (4) of the casing (5) a green rubber cushion (8) and a pre-cured tread strip (9) provided with a tread pattern;
a curing station (10) for curing the green rubber cushion (8) inserted within the tyre (2) between the casing (5) and the pre-cured tread strip (9);
the cold retreading plant (1) is **characterized in** comprising:
an applicator device (12) for applying to the pre-cured tread strip (9) before curing, a filler (11) in a fluid state which enters the grooves of the tread pattern and forms a coating covering the pre-cured tread strip (9), wherein the filler (11) contains a material which shrinks during the curing; and
a removal device (13) for removing the filler (11) covering the pre-cured tread strip (9) after curing.

## Patentansprüche

1. Verfahren zum Kaltrunderneuern eines Reifens (2); wobei das Kaltrunderneuerungsverfahren die folgenden Schritte umfasst:
Entfernen der alten abgenutzten Lauffläche von dem Reifen (2), um eine Äquatorialoberfläche (4) einer Karkasse (5) des Reifens (2) freizulegen;
Wickeln eines Gummidämpferrohlings (8) und eines mit einem Laufflächenprofil bereitgestellten vorvulkanisierten Laufflächenstreifens (9) um die Äquatorialoberfläche (4) der Karkasse (5); und
Vulkanisieren des innerhalb des Reifens (2) zwischen der Karkasse (5) und dem Laufflächenstreifen (9) eingesetzten Gummidämpferrohlings (8);
Aufbringen auf den vorvulkanisierten Laufflächenstreifen (9) vor dem Aushärten,
eines Füllstoffs (11) in flüssigem Zustand, der in die Rillen des Laufflächenprofils eindringt und eine Beschichtung bildet, die den vorvulkanisierten Laufflächenstreifen (9) bedeckt; und
Entfernen des Füllstoffs (11), der den vorvulkanisierten Laufflächenstreifen (9) nach dem Aushärten bedeckt;
das Kaltrunderneuerungsverfahren ist **dadurch gekennzeichnet, dass** der Füllstoff (11) ein Material enthält, das beim Aushärten schrumpft.

2. Verfahren nach Anspruch 1, wobei der Füllstoff (11) Ton oder ein anderes ähnliches natürliches Material enthält.

3. Verfahren nach Anspruch 1, wobei der Füllstoff (11) Metallpulver enthält.

4. Verfahren nach einem der Ansprüche 1 bis 3, wobei der Füllstoff (11) Elastomerpulver enthält.

5. Verfahren nach Anspruch 4, wobei das Elastomerpulver mindestens teilweise durch Zerkleinern der alten, abgenutzten Lauffläche erhalten wird.

6. Verfahren nach einem der Ansprüche 1 bis 5, wobei der Füllstoff (11) Bindemittel umfasst, die nach dem Aufbringen des flüssigen Füllstoffs (11) trocknen.

7. Verfahren nach Anspruch 6, bei dem die Bindemittel aus Polyvinylleimen bestehen.

8. Verfahren nach einem der Ansprüche 1 bis 5, wobei der Füllstoff (11) frei von Bindemitteln ist, die nach dem Aufbringen des flüssigen Füllstoffs (11) trocknen.

9. Verfahren nach Anspruch 8, wobei der Füllstoff (11) nach dem Aufbringen des Füllstoffs (11) in flüssigem Zustand durch mechanische Verdichtung zumindest teilweise stabil gemacht wird.

10. Verfahren nach einem der Ansprüche 1 bis 9, wobei der Reifen (2) während des Vulkanisierens auf Umgebungsdruck beibehalten wird und ein Radialdruck mechanisch auf den Laufflächenstreifen (9) durch Drücken von außen auf den Füllstoff (11), der den vorvulkanisierten Laufflächenstreifen (9) bedeckt, aufgebracht wird.

11. Verfahren nach Anspruch 10, wobei, während des Vulkanisierens, ein radialer Druck mechanisch auf den vorvulkanisierten Laufflächenstreifen (9) durch eine Reihe von Druckkörpern (15) aufgebracht wird, die ringförmig um den Reifen (2) angeordnet sind und mit einer bestimmten Radialkraft gegen den Füllstoff (11) gedrückt werden, der den vorvulkanisierten Laufflächenstreifen (9) bedeckt.

12. Verfahren nach Anspruch 11, wobei die Druckkörper (15) erwärmt werden, um Wärme auf den vorvulkanisierten Laufflächenstreifen (9) und dann auf das Substrat (8) zu übertragen.

13. Verfahren nach einem der Ansprüche 1 bis 12, wobei der Füllstoff (11) in flüssigem Zustand auf den vorvulkanisierten Laufflächenstreifen (9) aufgebracht wird, bevor der vorvulkanisierte Laufflächenstreifen (9) um die Karkasse (5) gewickelt wird.

14. Verfahren nach einem der Ansprüche 1 bis 12, bei dem der Füllstoff (11) in flüssigem Zustand auf den vorvulkanisierten Laufflächenstreifen (9) aufgebracht wird, nachdem der vorvulkanisierte Laufflächenstreifen (9) um die Karkasse (5) gewickelt wurde.

15. Kaltrunderneuerungsanlage (1) zum Durchführen des Verfahrens nach einem der vorstehenden Ansprüche, umfassend:
eine Entfernungsstation (3) zum Entfernen des alten abgenutzten Laufflächenstreifens von dem Reifen (2), um die Äquatorialoberfläche (4) der Karkasse (5) des Reifens (2) freizulegen;
eine Wickelstation (7) zum Wickeln eines Gummidämpferrohlings (8) und eines mit einem Laufflächenprofil bereitgestellten vorvulkanisierten Laufflächenstreifens (9) um die Äquatorialoberfläche (4) der Karkasse (5);
eine Vulkanisierstation (10) zum Vulkanisieren des innerhalb des Reifens (2) zwischen der Karkasse (5) und dem Laufflächenstreifen (9) eingesetzten Gummidämpferrohlings (8);
wobei die Kaltrunderneuerungsanlage (1) **dadurch gekennzeichnet ist, dass** sie Folgendes umfasst:
eine Aufbringvorrichtung (12) zum Aufbringen eines Füllstoffs (11) in flüssigem Zustand auf den vorvulkanisierten Laufflächenstreifen (9) vor dem Aushärten, der in die Rillen des Laufflächenprofils eindringt und eine Beschichtung bildet, die den vorvulkanisierten Laufflächenstreifen (9) bedeckt, wobei der Füllstoff (11) ein Material enthält, das beim Aushärten schrumpft; und
eine Entfernungsvorrichtung (13) zum Entfernen des Füllstoffs (11), der den vorvulkanisierten Laufflächenstreifen (9) nach dem Aushärten bedeckt.

## Revendications

1. Procédé de rechapage à froid d'un pneumatique (2) ; le procédé de rechapage à froid comprend les étapes consistant à :
retirer l'ancienne bande de roulement usée du pneumatique (2) afin d'exposer une surface équatoriale (4) d'une carcasse (5) du pneumatique (2) ;
enrouler autour de la surface équatoriale (4) de la carcasse (5) une gomme de liaison en caoutchouc cru (8) et une bande de rechapage pré-vulcanisée (9) pourvue d'un motif de bande de roulement ; et
vulcaniser la gomme de liaison en caoutchouc cru (8) insérée dans le pneumatique (2) entre la carcasse (5) et la bande de rechapage pré-vulcanisée (9) ;
appliquer à la bande de rechapage pré-vulcanisée (9) avant vulcanisation un bourrage (11) dans un état fluide qui entre dans les rainures du motif de bande de roulement et forme un revêtement recouvrant la bande de rechapage pré-vulcanisée (9) ; et
retirer le bourrage (11) recouvrant la bande de rechapage pré-vulcanisée (9) après la vulcanisation ;
le procédé de rechapage à froid est **caractérisé en ce que** le bourrage (11) contient un matériau qui se rétracte lors de la vulcanisation.

2. Procédé selon la revendication 1, dans lequel le bourrage (11) contient une argile ou un autre matériau naturel similaire.

3. Procédé selon la revendication 1, dans lequel le bourrage (11) contient une poudre métallique.

4. Procédé selon l'une quelconque des revendications 1 à 3, dans lequel le bourrage (11) contient une poudre d'élastomère.

5. Procédé selon la revendication 4, dans lequel la poudre d'élastomère est au moins partiellement obtenue en écrasant l'ancienne bande de roulement usée.

6. Procédé selon l'une quelconque des revendications 1 à 5, dans lequel le bourrage (11) comprend des liants qui sèchent après application du bourrage (11) fluide.

7. Procédé selon la revendication 6, dans lequel les liants sont constitués de colles polyvinyliques.

8. Procédé selon l'une quelconque des revendications 1 à 5, dans lequel le bourrage (11) est exempt de liants qui sèchent après application du bourrage (11) fluide.

9. Procédé selon la revendication 8, dans lequel le bourrage (11) est rendu au moins partiellement stable après application du bourrage (11) à l'état fluide par compactage mécanique.

10. Procédé selon l'une quelconque des revendications 1 à 9, dans lequel, lors de la vulcanisation, le pneumatique (2) est maintenu à pression ambiante et une pression radiale est appliquée mécaniquement sur la bande de rechapage (9) en pressant depuis l'extérieur sur le bourrage (11) recouvrant la bande de rechapage pré-vulcanisée (9).

11. Procédé selon la revendication 10, dans lequel, lors de la vulcanisation, une pression radiale est appliquée mécaniquement à la bande de rechapage pré-vulcanisée (9) par une série de corps de pression (15), qui sont disposés autour du pneumatique (2) pour former un anneau et sont poussés avec une force radiale déterminée contre le bourrage (11) qui recouvre la bande de rechapage pré-vulcanisée (9).

12. Procédé selon la revendication 11, dans lequel les corps de pression (15) sont chauffés pour transmettre de la chaleur à la bande de rechapage pré-vulcanisée (9) puis au substrat (8).

13. Procédé selon l'une quelconque des revendications 1 à 12, dans lequel le bourrage (11) à l'état fluide est appliqué à la bande de rechapage pré-vulcanisée (9) avant l'enroulement de la bande de rechapage pré-vulcanisée (9) autour de la carcasse (5).

14. Procédé selon l'une quelconque des revendications 1 à 12, dans lequel le bourrage (11) à l'état fluide est appliqué sur la bande de rechapage pré-vulcanisée (9) après l'enroulement de la bande de rechapage pré-vulcanisée (9) autour de la carcasse (5).

15. Installation de rechapage à froid (1) destinée à mettre en œuvre le procédé selon l'une quelconque des revendications précédentes, comprenant :
un poste de retrait (3) pour le retrait de l'ancienne bande de roulement usée du pneumatique (2) afin d'exposer une surface équatoriale (4) d'une carcasse (5) du pneumatique (2) ;
un poste d'enroulement (7) pour l'enroulement autour de la surface équatoriale (4) de la carcasse (5) d'une gomme de liaison en caoutchouc cru (8) et d'une bande de rechapage pré-vulcanisée (9) pourvue d'un motif de bande de roulement ;
un poste de vulcanisation (10) pour vulcaniser la gomme de liaison en caoutchouc cru (8) insérée dans le pneumatique (2) entre la carcasse (5) et la bande de rechapage pré-vulcanisée (9) ;
l'installation de rechapage à froid (1) est **caractérisée en ce qu'**elle comprend :
un dispositif applicateur (12) pour appliquer sur la bande de rechapage pré-vulcanisée (9) avant la vulcanisation un bourrage (11) dans un état fluide qui entre dans les rainures du motif de bande de roulement et forme un revêtement recouvrant la bande de rechapage pré-vulcanisée (9), le bourrage (11) contenant un matériau qui se rétracte pendant la vulcanisation ; et
un dispositif de retrait (13) pour retirer le bourrage (11) recouvrant la bande de rechapage pré-vulcanisée (9) après la vulcanisation.
